# EUROPEAN PATENT APPLICATION

(11) **EP 2 377 675 A1**
(43) Date of publication of application: **19.10.2011**
(21) Application number: 10160262.1
(22) Date of filing: 19.04.2010
(51) Int. Cl.: B29C 70/52, B29B 15/12

(54) **Impregnation assembly and method for manufacturing a composite structure reinforced with long fibers**

(71) Applicant: 3B-Fibreglass SPRL, 4651 Battice (BE)
(72) Inventor: Kashikar, Sanjay P., 4728, KELMIS (BE)
(74) Representative: Vandeberg, Marie-Paule L.G.

(57) **Abstract**

An impregnation system (1) suitable for impregnating filaments continuously with an impregnating substance (8), the system (1) comprising an impregnation assembly (3) comprising:
(c) at least one passageway (30) for the filaments having an entrance end (301) and an exit end (302); and
(d) at least one passageway (323) for the impregnating substance having at least one inlet (325) for the impregnating substance and at least two outlets (324) for the impregnating substance,

wherein:
- the passageway (323) for the impregnating substance is connected to the passageway (30) for filaments via the outlets (324) for the impregnating substance ; and
- the at least two outlets (324) for the impregnating substance have an oblong shape disposed across the flow (A) of filaments and oppose to each other; and
- the passageway (30) has a flat cross section.

## Description

### Technical Field

The present invention relates to an impregnation assembly and a method for manufacturing continuous fiber reinforced composite structures, which provides improvements in productivity and product properties such as quality, aesthetics and flexibility, as well as environmental and cost advantages. More particularly, the invention relates to a new cross-head die assembly designed for impregnating continuous filaments or fibers with an impregnating substance such as polymer matrix. The present invention also relates to a thermoplastic composite such as prepreg, reinforced with continuous fiber such as glass, carbon and graphite fiber, which is suitable for use in a subsequent processing with cost, speed and environmental advantages. The present invention particularly relates to a method and system which uses an impregnation means comprising a step of sandwiching the multi-filaments with two portions of the impregnating substance at the initial meeting point of the filaments and the impregnating substance. The present invention further relates to a method and a system for an in-line manufacturing intermediate or final composite structure reinforced with continuous long fibers, such as pipe, cylinders, tube and panels.

### Background for the Invention

Polymers can be reinforced by fibrous materials, such as glass fiber, to provide them with additional strength. Reinforced polymer materials, the composites, have wide applications in, for example, the aerospace, automotive, chemical, and sporting goods industries.

Continuous fibers are employed in various composite fabrication processes. Typical processes include pultrusion, filament winding, wire coating, tapes, pre- and post-preg and others like extrusion-compresssion molding, extrusion-injection molding, pushtrusion, push-pultrusion processes.

In thermoset composites, pultrusion is a well established process utilizing mainly continuous reinforcement strands to produce linear composite structures. Commonly, the fiber strands are passed through an open bath consisting of chemicals meant for impregnating the fibers, then through a heated die for shaping and curing and then pulling the cured part on a continuous basis.

Although the thermosetting precursor impregnating formulation can have low viscosity, which is facilitating the wetting of the fibers, this conventional impregnating open bath exposes large surface to atmosphere and does not restrict odour and emission of hazardous, volatile chemicals and solvents that may be present in the impregnating precursor formulations. Another disadvantage of open bath is, the strands soaked with resin are generally squeezed under friction to remove excess resin picked up by the strands. Over time, the squeezing friction can lead to broken filaments creating fuzz in the bath and, thereby, hindering smooth wetting of fibers. Also, there is resin build up on the squeezer which becomes cured and hard causing fiber breaks. Further, the bigger open baths pose difficulties in controlling the pot life of the thermosetting impregnating formulation leading to inconsistent viscosity and wetting of the strands. Also, squeezing out of the excess resin mix from the soaked strands limits achieving optimum fiber to matrix ratio.

An impregnation assembly and system according to the present invention overcomes these problems.

Although thermosetting composites provide many advantages, once cured, they cannot be softened, reshaped or given curve. On the other hand, thermoplastic materials offer several benefits over thermosetting and steel material, such as lighter weight, non-corroding, unlimited raw material shelf life, moldability, higher fracture elongation, higher impact or fracture toughness, recyclability, speedy processes and cleaner manufacturing environment. Therefore, process development, especially in the case of thermoplastic matrix, is of great interest to the industry.

A composite part performs well when the reinforcement fibers are well wetted, impregnated or dispersed within the matrix. In processes, when continuous fibers are utilised to produce directly pre-pregs or the final reinforced composite parts, the wetting and good impregnation of fibers is important during their operation.

Thermoplastic compositions are, however, more difficult to impregnate into the reinforcing material because of comparatively higher viscosities. Therefore, thermoplastics wet and impregnate the fibers at much slower rate as opposed to thermosetting material which have considerably lower initial viscosities. Generally, these slow rates are due to the need to impregnate a fiber reinforcing material with a thermoplastic matrix without breaking the fibers under extremely high pulling forces through the impregnation process. Products with insufficiently wetted fibers can result in poor quality composites, e.g., lacking mechanical strength and aesthetic properties. Consequently, continuous fiber thermoplastic processes are forced to run only at slower rates in order to get acceptable wetting and impregnation.

Generally, the quality and performance of the part are affected when such processes are run at higher speeds. Namely, due to the much higher viscosities of thermoplastic material, the thermoplastic material cannot be adequately penetrated and distributed throughout the strand at high production speed thus leading to unacceptable dispersion of the fibers in the subsequently processed product.

Typically, thermoplastic pre-pregs (unidirectional or fabric based) and post-pregs (comingled fiber, powder coated strands) materials have been in use for making the final composite parts with continuous fibers, but they need consolidation and compaction under heat and pressure to turn into composite part. During laying up, consolidation and compaction, air may get trapped in interlayers. Also, intermingling of resin molecules of two layers may require higher heat, compaction pressure and longer time. This way, composite parts can be made at faster rates, but such two-step processes suffer from cost, extra thermal history, handling, processing problems and quality issues for the final part and seriously limit any flexibility for the users in changing the formulation package, color and amount of fibers.

Solvent can be used to reduce viscosity of thermoplastic matrix. U.S. Pat. No. 4,738,868 discloses a solution processing wherein polymer is dissolved in a solvent and the fiber tow is impregnated with the resulting low viscosity solution. U.S. Pat. No. 6,372,294 discloses an impregnation using a suspension of thermoplastic particles in a bath. In either case, the solvent must be driven off after the impregnation step, resulting in an additional step in the process as well as an unwanted emission. Moreover, the desired matrix may be insoluble in common solvent or impossible to be transformed into the particle form.

Generally, direct melt impregnation of a fiber strand with molten polymer is possible. The composite structures are prepared by passing the fiber strand, which is typically of continuous fibers, through a passage in a die, allowing to impregnate the fiber strand with a molten thermoplastic resin in the die, and shaping the impregnated fiber bundle to a desired shape such as that of rod using a shaping die. Particularly, the direct melt impregnation techniques are most suitable for in-line impregnation of continuous fibers. High speed, and therefore more economical, wire coating process coats the bundled strands with the molten matrix. For example, such direct melt coating technique is disclosed in the U.S. Pat. No. 3993726. The technique, however, has a disadvantage that the fiber strand can be coated only from outside by the matrix resin with no appreciable impregnation of fiber bundle occurring with the resin in the cross-head die. Therefore this technique is not very useful to obtain good in-line impregnation of continuous fibers. Products, for example pellets, made from such process, when molded, lead to undispersed fiber bundles in the final composite part. In order to improve the fiber dispersion in the final part, such pellets require molding at higher shear, but that can lead to fiber breakage, fiber length shortening and, therefore, to reduction in mechanical performance.

In order to improve the impregnation in a direct melt-impregnation system, typically the bundled strand is forced to undergo opening under friction in a hot-melt polymer vessel.

U.S. Pat. No. 5268050 discloses a die assembly using friction bars placed within the molten thermoplastic bath, wherein the friction is applied individually to the continuous fibers over the bars. The fiber strands are passed over and pressed against series of friction bars in order to open, flatten and spread the strand into filaments so that majority of individual filaments are exposed to a hot-melt thermoplastic polymer, thereby easing the penetration of matrix melt through the filaments. If fiber compacted bundle is passed through this assembly without friction applied, the expected impregnation quality is poor.

Similarly, U.S. Pat. No. 4937028 discloses forming a fiber reinforced product using friction in a hot-melt thermoplastic matrix to improve impregnation performance. The friction/tension is applied individually to a fibers in a meandering passage provided in the cross-head die when the fiber bundle passes the top and bottom portions of the passage.

Also, U.S. Pat. No. 5540797 discloses a pultrusion apparatus and process for forming thermoplastic impregnated fibers by guiding the fiber tows alternately over and under the plurality of spaced annular rings to alternately spread and converge the fiber tows in order to ensure maximum exposure to the hot-melt impregnation resin in the impregnation vessel.

In the process of manufacturing composite structures reinforced with long fibers disclosed in the above references, the opening of bundled fiber strand into multiple filaments occurs mainly by friction in the hot-melt matrix, generating higher level of tension or pulling force on each fiber individually. The combination of friction and tension on the fibers, particularly at high temperature in the hot-melt matrix, may cause fiber breakage leading to fuzz generation. Also, higher tensions can cause the strand to break. Fuzz generation can lead to die blocking needing maintenance and strand breakage can induce a production interruption.

Consequently, conventional processes for impregnation by exposing a fiber reinforcing material to friction and high pulling force in a hot-melt viscous matrix have deficiencies which tend to limit the quality of the product or the speed of the preparation. The problems can become severe at higher production speeds or with higher content of reinforcing materials. Therefore, such processes can be run only at much lower and uneconomical speeds.

Accordingly, good wetting of fibers at the microscopic level at high production speed with the good dispersion of fibers in a reinforced polymer structure is the ultimate goal.

It is, therefore, of great interest to develop better, simpler method and apparatus for impregnating continuous fiber, particularly which are suitable for in-line system enabling to manufacture reinforced thermoplastic structures in one-step, with improved quality, manufacturing and formulation flexibility, aesthetics, performance, higher production speeds and lower costs. It is also of great importance to provide an in-line system for manufacturing continuous fiber reinforced thermoplastic structure which comprises a simple device to provide strands in spread filaments form without using high friction or tension on the strand or filaments so as to ease the impregnation step of the in-line system and to allow higher line speeds.

The present invention proposes a solution for manufacturing filament reinforced composite structure with a novel apparatus for impregnating a continuous long reinforcing fiber material with an impregnating substance, particularly having comparatively high viscosity at an impregnating temperature, such as thermoplastic matrix.

The present invention further proposes a novel in-line system and a method for manufacturing a continuous fiber reinforced composite structure in-line, in particular, by comprising a simple means which can provide a strand in spread filaments form without using high friction or tension on the strand or filaments. The proposed system enables easier and faster impregnation and also offers formulation flexibility for the manufacturer, such as adjusting fiber content, matrix type, color and any other additions of process-, performance- and aesthetic enhancement additives.

### Summary of the invention

The subject matter of the present invention is defined in the appended independent claims. Preferred embodiments are defined in the dependent claims.

In a first embodiment, the subject matter of the present invention is an impregnation system suitable for impregnating filaments continuously with an impregnating substance, said system comprising an impregnation assembly comprising (a) at least one passageway for the filaments having an entrance end and an exit end and (b) at least one passageway for the impregnating substance having at least one inlet for the impregnating substance and at least two outlets for the impregnating substance , wherein the passageway for the impregnating substance is connected to the passageway for filaments via the outlets for the impregnating substance , the at least two outlets for the impregnating substance have an oblong shape disposed across the flow of filaments and oppose to each other, and the passageway has a flat or oblong cross section.

In particular, the impregnation assembly for impregnating filaments with the impregnating substance comprises a wall of passageway for filaments disposed upstream from the outlet for the impregnating substance and horizontally adjacent thereto is capable to make a to-and-fro motions with respect to the outlet so as to change the size of the outlet for the impregnating substance.

Preferably, the impregnation assembly further comprises (a) an inner die comprising a passageway for filaments, a projection end having a flat or oblong cross section and an entrance end, and (b) an outer die comprising an inner space, an exit passage having a flat or oblong cross section, an exit end, and a passage for impregnating substance, wherein the inner die is positioned in the inner space of outer die and the projection end of the inner die is positioned to form the outlets for the impregnating substance , the passageway comprises the passageway of inner die, the exit passage of outer die, and at least two outlets for the impregnating substance opposite each other.

Preferably, the impregnation assembly further comprises (a) an inner die comprising a passageway for filaments, a projection end having a flat or oblong cross section and an entrance end, and (b) an outer die comprising an inner space, an exit passage having a flat or oblong cross section, an exit end and a passage for the impregnating substance , wherein the inner die is positioned in the inner space of outer die and the projection end of the inner die is positions to form the outlets for the impregnating substance , and the passageway comprises the passageway of inner die, the exit passage of outer die and at least two outlets for the impregnating substance opposite each other.

Advantageously, the project end of the inner die has a rectangular or substantially rectangular cross section.

In one particular embodiment, the impregnation system also comprises a spreader assembly disposed upstream from the impregnation assembly.

The spreader assembly comprises in particular (a) at least one passageway for filaments having an inlet for receiving filaments and an outlet through which the filaments go out said passageway, (b) divergent zone within the passageway having an entrance end and an exit end, wherein the area of the exit end is larger than the one of the entrance end and the divergent zone has a flat cross-section, preferably rectangular cross-section, and (c) at least one through hole connected to the passageway at an angle, preferably substantially perpendicular with respect to the longitudinal direction of the passageway, and suitable for introducing air flow thereto.

Preferably, the though hole of the spreader assembly is connected to the passageway for the filament through an outlet for air disposed adjacent to the entrance end of the divergent zone.

Advantageously, the outlet for air has one or more holes smaller than the dimension of the though hole.

In a preferred embodiment of the impregnation system the passageway of said spreader assembly further comprises an inner channel having a rectilinear shape disposed between the inlet opening of the passageway and the entrance end of the divergent zone.

Preferably, the hole of said spreader assembly is disposed in the inner channel, and more preferably immediately upstream from the entrance end of the divergent zone.

Preferably, the outlet for air of said spreader assembly is disposed within the inner channel, and more preferably at a point immediately upstream from the entrance end of the divergent zone.

Advantageously, the divergent zone of the said spreader assembly has a top wall, a bottom wall and sidewalls, wherein the sidewalls diverge outwardly from the entrance end toward the exit end, preferably at an angle greater than 0° and less than 90°, preferably between 5° and 85°, more preferably between 10° to 40°.

The subject matter of the present invention is also a method of producing a reinforced composite structure comprising the steps of (a) supplying two or multiple filaments from one or more source of continuous filaments and (b) subjecting said filaments to at least two flows of the impregnating matrix substance sandwiching and impregnating the filaments.

Preferably, the supplied impregnating substance, is in liquid, molten or gel form inside the die at any given impregnating temperature.

Advantageously, the impregnating substance is any matrix or chemical formulation capable of flowing inside the impregnating die. In one preferred embodiment, thermoplastic polymer or their mixtures or blends can be implemented as matrix to be used. Preferably, thermoplastics can be selected from a group of Polyolefins (e.g., PE, PP, PB), Polyamides (e.g., PA, PPA), Polyimides (e.g., PI, PEI), Polyamide-imides, Polysulphones (e.g., PS, PES), Polyesters (e.g., PET, PBT), Polycarbonates, Polyurethanes, Polyketones, (e.g., PK, PEK, PEEK), Polyacrylates, Polystyrenes, Polyvinylchlorides, ABS, PC/ABS and a mixture thereof, or a thermosetting resin precursor can be selected from a group of Epoxy, Ester, Urethanes, Phenolic, Alkyd and a mixture thereof.

The filaments supplied at step (a) are preferably selected from a group of glass fibers, mineral fibers, carbon and graphite fibers, natural fibers, polymeric and synthetic fibers.

Advantageously, the filaments supplied at step (a) are coated by a sizing and/or binding agent.

Preferably, the method according to the invention further comprises steps of converging the spread filaments supplied at step (a) in a passageway of an impregnation assembly, and forming a flat shape of the spread filaments prior to the initial meeting point of the filaments and the impregnating substance.

The flow of the impregnating substance is preferably supplied via an outlet for the impregnating substance having an oblong shape.

Advantageously, the flow of the impregnating substance in step (b) is in a form of layer at the initial meeting point of the filaments and the impregnating substance.

In particular, the method further comprises steps of pulling the sandwiched filaments with the impregnating substance through an exit passage having a flat cross-section.

The method according to the invention preferably comprises further steps of subjecting a strand and/or filaments supplied at step (a) to air flow at an angle, preferably substantially perpendicular, with respect to the moving direction of the strand and/or filaments within a passageway of a spreader assembly.

Advantageously said strand and/or filaments are subjected to the air flow through at least one hole disposed at the one end of a through hole connecting to the passageway, wherein the passageway comprises an inlet opening for receiving said fiber strand and/or filaments, an outlet opening through which said strand and/or filaments go out the passageway, and a divergent zone having an entrance end and an exit end wherein the area or said exit end is larger than the one of the said entrance end.

Preferably, the strand and/or filaments are subjected to the air flow within an inner channel having a rectilinear shape which is disposed between the inlet opening of the passageway and the entrance end of the divergent zone, preferably disposed at a point immediately upstream from the entrance end of the divergent zone

Advantageously, the method according to the present invention further comprises a step of heating the strand and/or filaments prior to step (b).

The method according to the invention preferably comprises further steps of flattening the impregnated fibers provided by step (b), and thereafter winding up the impregnated fibers onto a winding core.

The method according to the invention preferably comprises further steps of shaping the impregnated fibers provided by step (b) collectively into a rod, and thereafter cutting the rod to desired length.

These and other aspects of the present invention will become clear to those of ordinary skill in the art upon the reading and understanding of the specification.

### Brief description of the Figures

This invention will be further described in connection with the attached drawing figures showing preferred embodiments of the invention including specific parts and arrangements of parts. It is intended that the drawing included as part of this specification be illustrative of the preferred embodiments of the invention and should in no way be considered as a limitation on the scope of the invention.
FIG.1 is a schematic illustration of one preferred embodiment of the impregnation system according to the present invention showing the relationship of various components and apparatus used in the system.
FIG.2 is a perspective view of a passageway for filaments in an impregnation assembly according to the present invention.
FIG.3a is a longitudinal cross-section scale view of the impregnation assembly according to the present invention with a small size of outlet opening for the impregnating substance.
FIG.3b is a longitudinal cross-section scale view of the impregnation assembly according to the present invention shown in FIG.3a with a large size of outlet opening for the impregnating substance.
FIG.4 is a longitudinal cross-section scale view of the impregnation assembly shown in FIG.3a with the inner die removed.
FIG.5 is a cross-section of the impregnation assembly shown in FIG.3a defied by a cutting plane V-V illustrated in FIG.3a.
FIG.6 is a cross-section of the impregnation assembly shown in FIG.3a defied by a cutting plane VI-VI illustrated in FIG.3b.
FIG.7 is a longitudinal cross-section view of another preferable embodiment of the impregnation assembly made in accordance with the principles of the present invention.
FIG.8 is a longitudinal cross-section scale view of the impregnation assembly shown in FIG.7 with the inner die removed.
FIG.9 is a perspective view of the longitudinal cross-section of the impregnation assembly shown in FIG.8.
FIG.10 is a side view of the impregnation die assembly shown in FIG.7 with the outer die removed wherein multi-filaments are being impregnated with the impregnating substance.
FIG.11 is a top view of the impregnation assembly shown in FIG.10.
FIG.12 is a cross-section of the sandwiched multi-filaments with the impregnating substance at initial meeting point of the filaments and the impregnating substance, according to a cutting plane XII-XII illustrated in FIG.10
FIG.13 is a cross-section of the impregnated multi-filaments with the impregnating substance, according to a cutting plane XIII-XIII illustrated in FIG.10
FIG.14 is a side view of a preferable embodiment of the spreader assembly according to the present invention.

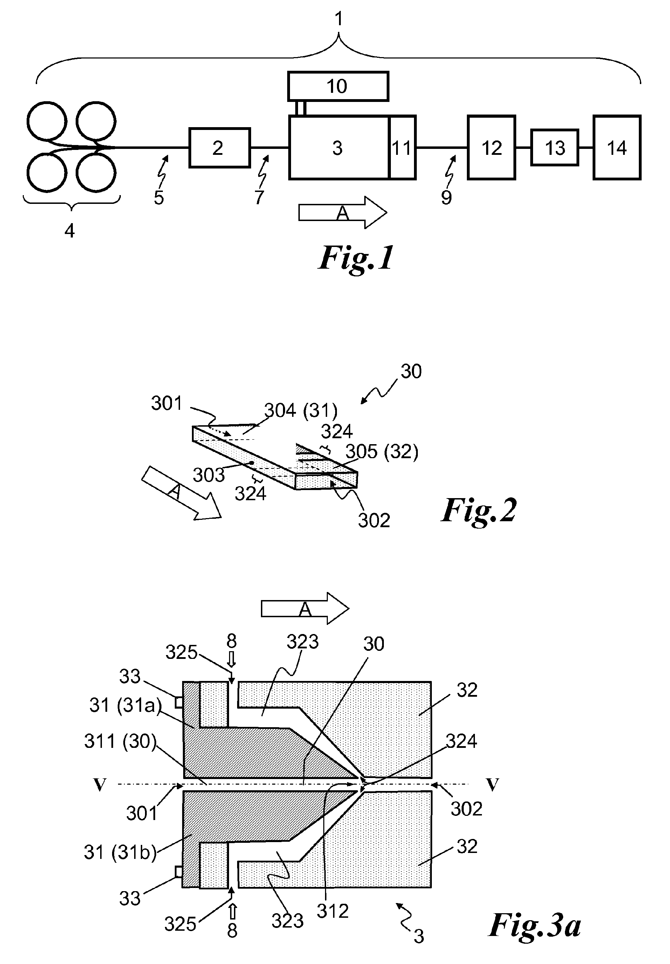

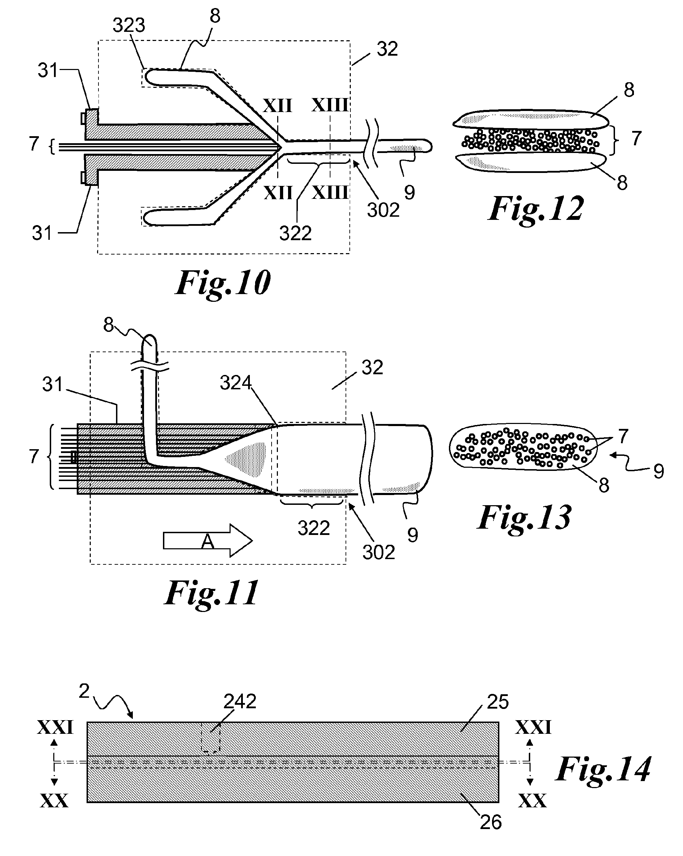

FIG.1 5 is an elevation view of the outlet opening of the spreader assembly shown in FIG.14.

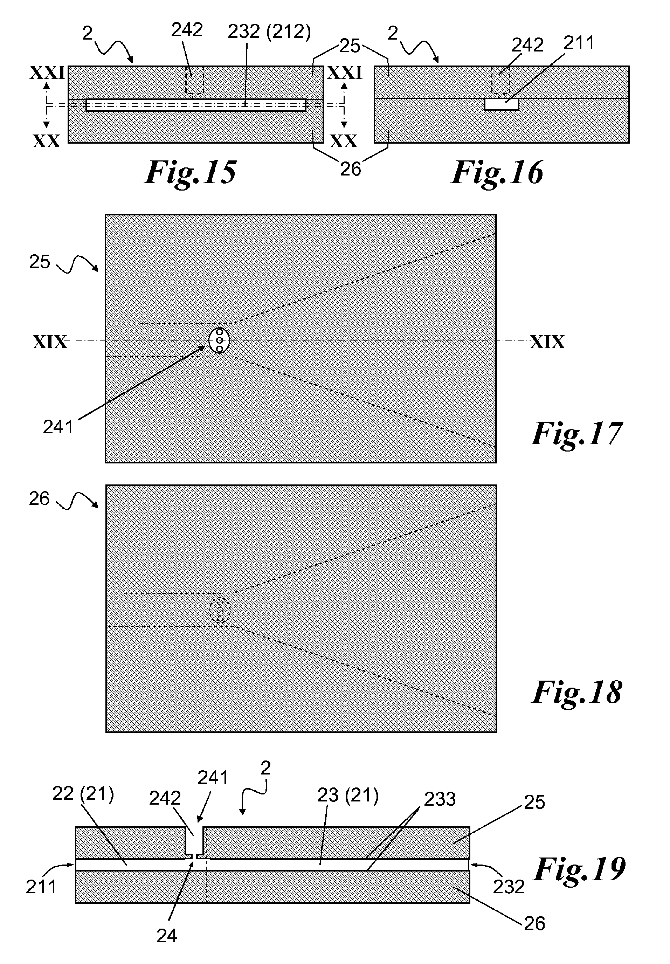

FIG.16 is an elevation view of the inlet opening of the spreader assembly shown in FIG.14.
FIG.1 7 is a plan view of the spreader assembly shown in FIG.14.
FIG.1 8 is a bottom view of the spreader assembly shown in FIG.14.
FIG.19 is a longitudinal cross-section scale view of the spreader assembly shown in FIG.14 according to a cutting plane XIX of FIG.1 7.

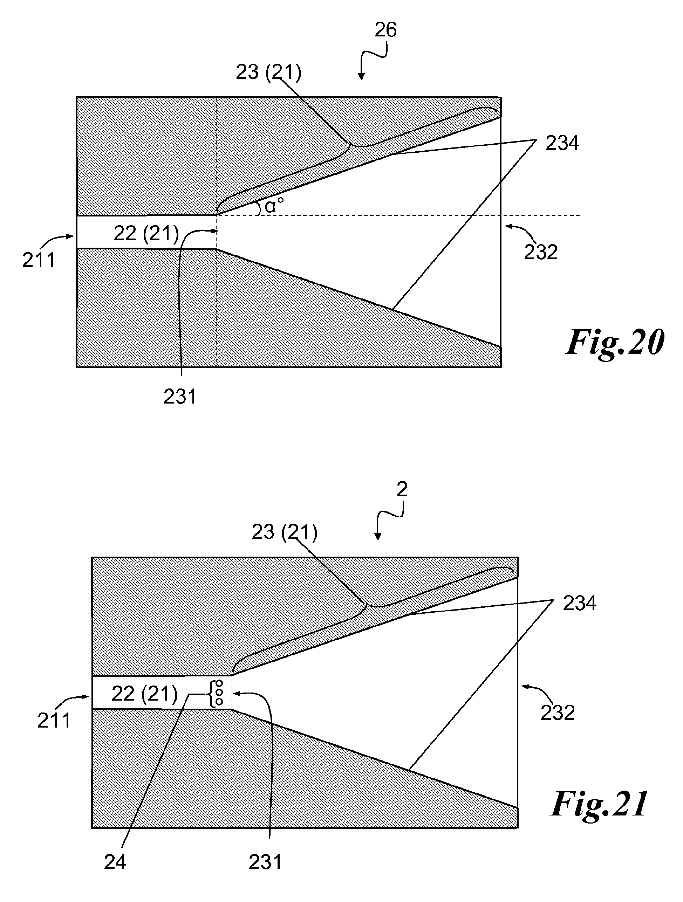

FIG.20 is a cross-section of the bottom part of the spreader assembly shown in FIG.14 according to a cutting plane XX of FIGs.14 and 15.
FIG.21 is a bottom view (cross-section) of the top part of the spreader assembly shown in
FIG.14 according to a cutting plane XXI of FIGs.14 and 15.

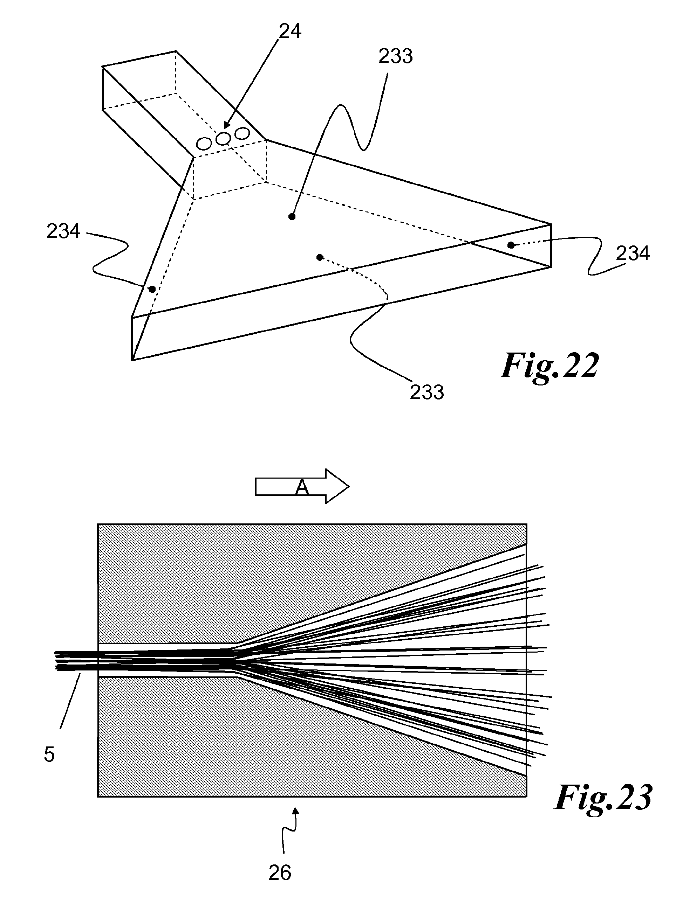

FIG.22 is a perspective view of a passageway for filaments in the spreader assembly according to the invention.
FIG.23 is a cross-section similar to FIG.20, wherein a bundle of filaments is being spread into individual filaments.

### Detailed description of the invention

The present invention overcomes several of the problems experienced with the prior art means for producing continuous filament reinforced composite products.

Specially, such problems include poor wetting or impregnation of the continuous filaments and slow operation speeds or friction and fuzz creation. The present invention overcomes these problems by feeding the fibers to be impregnated through a specially designed impregnation die assembly. The general design of the die assembly allows for the maximization of the contact of the impregnating matrix with the filaments of a multifilament strand. The present invention also enables operation at much reduced friction thereby avoiding any fuzz creation and improving the line speeds and the productivity. The present invention also allows the manufacturer with the flexibility to use any suitable raw material, color and additive package as well as adjust the fiber content of the composite structure. The present invention also overcomes the environmental and emission problems of hazardous, volatile chemicals and solvents by impregnating the fibers in a closed impregnation system. The present invention also overcomes the problem of uniformly distributing the reinforcing continuous fibers in a composite structure by feeding the spread fibers converged in a flat shape, sandwiching them between two portions of impregnating substance, and then pulled through a passage having a flat cross-section. The present invention further overcomes the problem of achieving an optimum fiber to polymer ratio by adjusting the amount of impregnating substance sandwiching the fibers at the initial meeting point of the fibers and the impregnating substance.

"Filament" or "monofilament" means the smallest increment of fiber. The terms "strand", "tow" or "bundle" as used herein, mean a plurality of individual fibers ranging from, but not limited to, dozens to thousands in number, collected, compacted, compressed or bound together by means known to the skilled person in order to maximize the content thereof or to facilitate the manufacturing, handling, transportation, storage or further processing thereof. "Tape" is typically a material constructed of interlaced or unidirectional filament, strands, tows, or yarns, etc., usually pre-impregnated with resin.

The continuous fibers that may be employed in accordance with the present invention to reinforce a matrix such as thermoplastic or thermosetting resin are either organic, synthetic, natural, mineral, glass, ceramic or mixture of them and contain a plurality of continuous filaments. The fibers may be in any form and combination, such as filaments, strands, nonwoven veil, continuous filament mat, chopped strand mat, fabric, strong enough and having sufficient integrity and strength to be pulled through the impregnating substance such as molten thermoplastic polymer, and that may conveniently consist of bundles of individual filaments, referred to in the art as "strand", in which substantially all of the filaments are aligned along the length of the bundles. Preferably, the fibers are in a strand form, made up of continuous filaments. Any number of such strands may be employed. Suitable materials include strands and tapes of glass fiber, mineral, ceramic, carbon, graphite fiber, synthetic, polymeric fibers or natural fibers or mixtures and blends of them. In the case of commercially available glass rovings, each strand may consist of one or several smaller strands with altogether about 6,000 or more continuous glass filaments. Carbon fiber containing about 50,000 or more filaments may be used. Synthetic fibers that may be utilized within the scope of the present invention include polyolefin, aramid fibers, polyester, polyamide, polyimide fibers, acrylic fibers, vinyl fibers, benzoxazole based fibers, cellulose and cellulose derivative based fibers, carbon, graphite fibers, polyphenylene sulfide fibers, ceramic fibers.

Continuous fibers may be provided with any of the conventional surface sizing, particularly those designed to facilitate storage and transport before processing and improve usability.

Additionally, other coatings may be included on the fibers, particularly glass fibers, in order to protect the fiber from abrasion and improve the performance of the final composite part.

In the present invention, the impregnation substance may be a thermoplastic or a thermosetting precursor system, preferably crystalline or semicrystalline engineering thermoplastics that are commonly reinforced with fibers in the composite industry. Examples of the thermoplastic polymers include broad categories of polyolefins, polyamides, polycarbonates, polystyrenes, polyesters, polyvinyl chlorides, polyketones, polyetherketones, polyetheretherketones, polysulfides, polysulfones, polacetals, ABS or any combination thereof. One particularly preferred material includes polypropylene. Suitable thermosetting polymer precursors are for example, those based on Epoxy, Novolak, Phenolics, Polyesters, vinylester resin, Polyurethanes.

The viscosity of the impregnating substance such as thermoplastic matrix in the impregnation die assembly can be adjusted by controlling the temperature of the die assembly, up to just below the degradation temperatures of the impregnating substance, in order to have the optimum melt viscosity for the impregnation.

Various additives may be added to impregnating substance, in accordance with the processing and end use of the composite structure reinforced with long fibers and conditions under which the composite structure is used. Such additives include antioxidants, mold releasing agents, impregnation accelerators, mold releasing agents, fire retardants, impact modifiers, viscosity reducers, lubricants, compatibilizers, coupling agents, wetting and leveling agents and colorants.

The process and impregnation assembly are described in greater detail with reference to the drawings below.

Referring now to FIG.1, there is schematically shown the various pieces of equipment and apparatus useful to carry out the process according to the illustrated embodiment of the invention.

A bundle of continuous fibers 5 is supplied from a source 4 of continuous filament. The bundle of continuous fibers 5 is preferably twist-free, also known in the art as strand or roving. The fibers go through an opening and spreading means 2. Although an air blowing means 2 is described in FIGs. 14 to 23, any other strand opening and spreading means may be used. The resulting fiber-opened/spread bundle 7 is fed through impregnation die assembly 3. An impregnating substance 8 is delivered preferably under pressure to the impregnation assembly 3 utilizing e.g. an extruder 10.

The resulting matrix impregnated continuous fibers 9 may be given a desired shape with a shaping die 11 (profile die), such as a roving, rod, ribbon, tape, plate, panel, tube, cylinder or any other special shape. The impregnated continuous fibers 9 with the impregnating substance 8 is took up with a conventional pulling mechanism 13 after passing through the shaping die 11 (profile die). Using a squeezer die (profile die) or squeezing rolls or a doctor blade or the like, the polymer content and hence the fiber content of the composite material can also be optimally adjusted. Fiber contents from 10 to 80% by weight of the total, preferably from 20 to 70 %, and most preferably from 30 to 65%, are desired. The composite structure reinforced with long fibers which has been taken-up with a pulling mechanism 13 may be allowed to be cooled naturally or by a cooling means 12, or may be cured with heating die (not illustrated) if required. Depending upon the need, the hot impregnated continuous fiber exiting the die assembly may be directly wound on a winding core to make a final composite part or shaped into different profiles, and then cut optionally to a desired length with a cutter or pelletizer 14 to be submitted to other process. Thus, direct winding of impregnated fibers results in in-line impregnated continuous fiber reinforced composite structure, whereas after shaping and cutting the impregnated fibers, the obtained fiber reinforced composite structure comprises reinforcing fibers which have substantially the same length as the composite structure and which are aligned in parallel to the longitudinal direction of the composite structure and uniformly dispersed therein.

Referring now to FIGs. 2 to 6, the specific structure of the impregnation assembly 3 is described in more details. Specifically, impregnation assembly 3 comprises a passageway 30 for filaments having an entrance end 301 and an exit end 302 and two passageways 323 for the impregnating substance having each an inlet 325 and an outlet 324. The impregnating substance flows from the passageway 323 to the passageway 30 for filaments via the outlets 324 and enter into contact with the filaments. These outlets 324 are the initial meeting point of the filament and the impregnating substance. The passageway 30 for filaments has a flat cross-section, preferably substantially rectangular cross-section. The two outlets 324 for the impregnating substance have an oblong shape, preferably a rectangular shape, and are located across the passageway 30 and oppose to each other.

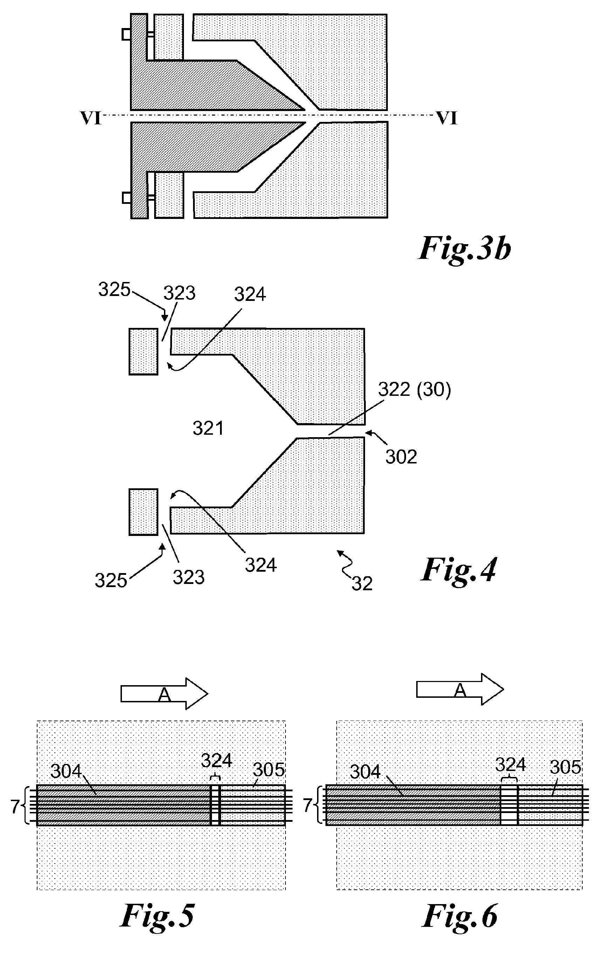

In a first embodiment described in FIGS. 3a, 3b, and 4, the impregnation assembly 3 is composed of an inner die 31 and an outer die 32. The inner die 31 defines a passageway 311 having an entrance end 301 and a projection end 312 which is a part of the passageway 30. The outer die 32 comprises an inner space 321, an exit passage 322 which is a part of the passageway 30, two passages 323 for the impregnating substance, two inlets 325, and two outlets 324 whose shape is defined by positioning the inner die 31 with respect to the inner space 321 of the outer die 32. The projection end 312 of the inner die 31 has a flat cross-section, preferably rectangular cross-section. The projection end 312 is positioned inside of the inner space 321 of the outer die 32 to make the two outlets 324 for the impregnating substance having an oblong shape and being located opposed to each other and across to the passage 30. In the passageway 30 of the impregnation assembly 3, a wall 304, immediately upstream from the outlet 324, consists of a part of an inner die 31, and a wall 305, immediately downstream from the outlet 324, consists of a part of an outer die 32 as shown FIG.2.

The wall 304 immediately upstream from the outlet 324 is capable to make to-and-fro motions with respect to the outlet 324 so as to change the size or the area of the outlet 324. FIG.5 shows a cross-section of the impregnation assembly with a small size of the outlet 324 of the passage 30 defined by a cutting plane V-V illustrated in FIG.3a and FIG.6 shows a cross-section of the impregnation assembly with a large size of the outlet 324 of the passage 30 defined by a cutting plane VI-VI illustrated in FIG.3b.

The inner die 31 may be separated into two pieces, for example an upper section and a lower section and each section may be capable to move individually along the axis of the passageway 30. The inner die 31 is attached to the outer die via flanges protruding from the inner die 31 using any one of a variety of devices such as a screw. The position of the inner die 31 is capable to change along the axial of the passageway 30 by tightening or turning a screw 33 which attaches the inner die 31 to the outer die 32 in horizontally with respect to the axial of the passageway 30 as shown in FIG.3a.

In order that there is sufficient flow rate of the impregnating substance, especially thermoplastic matrix, in the impregnation assembly 3, the impregnation assembly 3 is preferably heated with a heater placed along the outer die 32 and maintained at a temperature range usually above enough of the melt or softening temperature of the thermoplastic being utilized. The thermoplastic melt is fed into the die at a pressure of preferably from 1 to 80 bars, more preferably from 10 to 60 bars and most preferably from 1 5 to 50 bars.

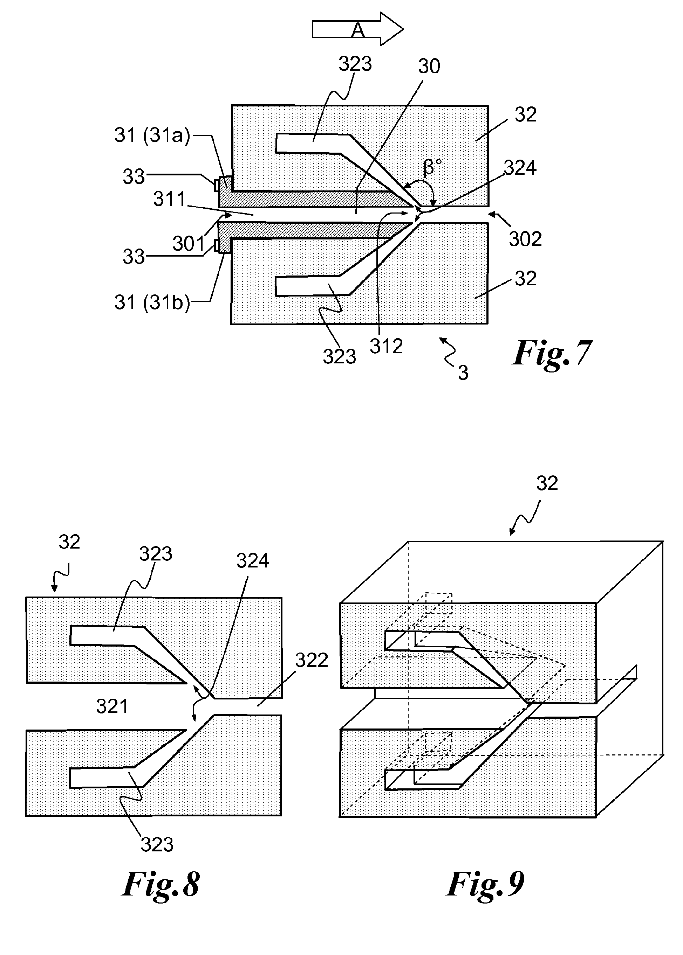

Referring now to FIGs. 7 to 9, another preferred embodiment of the impregnation assembly 3 is shown. A passage 323 for the impregnating substance may require only one inlet (not illustrated) and bifurcate into two passages continuing to at least two outlets 324. As shown in FIG.9, the impregnating substance may be provided to the passage 30 of the impregnation assembly 3 through a channel having rectilinear shape and then pass through a divergent zone having a flat cross-section at the exit end thereof. The size of the outlet 324 is able to be optimized by sliding the inner die 31 attached to the outer die 32 using screws 33 which are adjustable to set the distance between the inner die 31 and the outer die 32 along the direction of the axis of the passage 30 of the impregnation assembly.

The injection angle (β°) of the impregnating substance into the passageway 30 defined by the divergent zone of the passage 323 may be greater than 90° with respect to the direction (A) of filaments, preferably from 100° to 160°, more preferably from 120 to 145°, so as to facilitate feeding filaments ahead and assist the impregnation process without any breakage of filaments.

Referring now to FIGs. 10 and 11, a preferred process for the impregnation using the impregnation assembly 3 is shown. The impregnating substance 8 is provided through the passage 323 of the outer die 32 illustrated in FIGs. 7 to 9 via the two outlets 324 to the passageway 30 of the impregnation assembly 3 and meets the bundle of fibers 7 passing through the passageway 30. The bundle of fibers 7 in this context is a number of filaments which are spread substantially individually with a spreader shown in FIGs. 14 to 23 or other conventional fiber-opening or spreading means prior to entering the impregnation assembly 3. In the passage 30 having a flat cross-section the opened or separated fibers are converged so as to form a flat shape. The outlets 324 have oblong or rectangular shapes and are located opposite to each other. The spread bundle of fiber 7 meets the two flows of impregnating substance 8 introduced to the passageway 30 via the outlets 324. The two flows of impregnating substance 8 sandwich the filaments in flat shape and pass through the exit passage 322 of the outer die 32 while impregnating the filaments, and then exit the impregnation assembly 3 via the exit end 302 as a unitary impregnated fiber-reinforced composite product 9.

The impregnation assembly 3 may be constructed of any one of a variety of materials used for die tooling, such as tool steels, carbon steels, and stainless steels. Preferably, the impregnation assembly 3 construction is based on suitable stainless steel material.

It is significant that the design of the impregnation assembly 3 in accordance with the present invention allows for the spread or separated fibers to be pulled with much reduced friction through the impregnation die 3, and therefore, at a relatively high rate (exceeding 1 m/sec) in order to give higher output and productivity. It is to be understood that the impregnation assembly to impregnate the spread fibers does not pose running speed limitation on its own. The limitations may come from what product to be made in-line after the impregnation of the fibers or what after treatments are needed for the impregnated fibers. The running speeds need to be practical which will depend upon the composite structure to be made with its requirements.

As a preferable application of the present invention, the impregnation assembly and the method of the invention may be used for an in-line manufacture of a filament-wound pipe, such as wrapped tube, by winding the continuous long fibers onto a winding core, of various shapes and sizes, after the impregnation step. Advantageously, the winding step can be carried out immediately after the impregnation step, when the impregnated fibers are still hot.

A method for manufacturing a tube structure by helically winding up a band material of thermoplastics reinforced with short fibers onto a winding core in an overlapping manner are known, for example, from CA 2548983. In this method, before the reinforced thermoplastic material in a tape-shape is wound onto a mandrel, the cut fibers are mixed with the thermoplastic material.

Contrarily, according to the preferable method, the impregnating substance in a tape-shape, such as thermoplastic tape, is reinforced with continuous long fibers and wound up onto a winding core. After the continuous fibers impregnated with the impregnating substance have emerged from the impregnation assembly, it is wound up onto a winding core in an overlapping manner.

The winding core may be coupled to a motor so as to rotate and practice as pulling mechanism 13 which pulls the fibers supplied from the source 4 of continuous fibers 5 through the impregnation assembly 3 as shown in FIG.1 .

The winding core may be mounted on a reciprocating mechanism that is adapted to be displaced to and fro along a guide parallel to the winding core. The continuous fibers impregnated with the impregnating substance may be supplied to the winding core from the impregnation assembly via a profile die, preferably, under an oblique angle.

The winding core may be surrounded by means for controlling the temperature in order to keep the impregnating substance in a softened state.

The wrapped tube manufactured according to the preferred method of the present invention may have distinguished mechanical properties and aesthetic aspect caused by the fibers existing in continuous state and in parallel within the wrapping tape of the impregnating substance.

## Claims

1. An impregnation system (1) suitable for impregnating filaments continuously with an impregnating substance (8), the system (1) comprising an impregnation assembly (3) comprising:
(a) at least one passageway (30) for the filaments having an entrance end (301) and an exit end (302); and
(b) at least one passageway (323) for the impregnating substance having at least one inlet (325) for the impregnating substance and at least two outlets (324) for the impregnating substance,
wherein:
- the passageway (323) for the impregnating substance is connected to the passageway (30) for filaments via the outlets (324) for the impregnating substance ; and
- the at least two outlets (324) for the impregnating substance have an oblong shape disposed across the flow (A) of filaments and oppose to each other; and
- the passageway (30) has a flat cross section.

2. An impregnation system (1) according to claim 1, wherein a wall of passageway (30) for filaments disposed upstream from the outlet (324) for the impregnating substance and horizontally adjacent thereto is capable to make to-and-fro motions with respect to the outlet so as to change the size of the outlet (324) for the impregnating substance.

3. An impregnation system (1) according to claim 1 or 2 wherein the impregnation assembly further comprising:
(a) an inner die (31) comprising:
o a passageway (311) for filaments;
o a projection end (312) having a flat cross section; and
o an entrance end (301),
(b) an outer die (32) comprising:
o an inner space (321);
o an exit passage (322) having a flat cross section;
o an exit end (302); and
o a passage (323) for the impregnating substance,
wherein:
- the inner die (31) is positioned in the inner space (321) of outer die (32) and the projection end (312) of the inner die (31) is positions to form the outlets (324) for the impregnating substance ;
- the passageway (30) comprises:
o the passageway (311) of inner die (31);
o the exit passage (322) of outer die (32); and
o at least two outlets (324) for the impregnating substance opposite each other.

4. An impregnation system (1) according to any of the preceding claims further comprising a spreader assembly (2) disposed upstream from the impregnation assembly (3).

5. An impregnation system (1) according to claim 4 wherein the spreader assembly (2) comprising:
(a) at least one passageway (21) for filaments (5) having an inlet (211) for receiving filaments and an outlet (232) through which the filament exits said passageway (21),;
(b) divergent zone (23) within the passageway (21) having an entrance end (231) and an exit end (232), wherein the area of the exit end (232) is larger than the one of the entrance end (231) and the divergent zone (23) has a flat cross-section, preferably rectangular cross-section; and
(c) at least one through hole (242) connected to the passageway (21) at an angle, preferably substantially perpendicular with respect to the longitudinal direction of the passageway (21), and suitable for introducing air flow thereto.

6. An impregnation system (1) according to claim 4 or 5 wherein the though hole (242) is connected to the passageway (21) through an outlet (24) for air disposed adjacent to the entrance end (231) of the divergent zone (23).

7. An impregnation system (1) according to claim 6 wherein the outlet (24) for air has one or more holes smaller than the dimension of the though hole (242),

8. An impregnation system (1) according to any of claims 4 to 7 wherein said passageway (21) of the spreader assembly (2) further comprises an inner channel (22) having a rectilinear shape disposed between the inlet opening (211) of the passageway (21) and the entrance end (231) of the divergent zone (23).

9. An impregnation system according to claim 8 wherein the outlet (24) for air is disposed within the inner channel (22) at a point immediately upstream from the entrance end (231) of the divergent zone (23).

10. An impregnation system according to any of claims 4 to 9 wherein the divergent zone (23) has a top wall (233), a bottom wall (233) and sidewalls (234), wherein the sidewalls (234) diverge outwardly from the entrance end (231) toward the exit end (232), preferably at an angle greater than 0° and less than 90°, preferably between 5° and 85°, more preferably between 10° and 40°.

11. A method of producing a reinforced composite structure comprising the steps of:
(a) supplying two or multiple filaments from one or more source of continuous filaments (4); and
(b) subjecting said filaments to at least two flows of the impregnating matrix substance (8) sandwiching and impregnating the filaments (7).

12. A method according to claim 11 wherein the supplied impregnating substance is in liquid or gel form inside the die at any given impregnating temperature.

13. A method according to claim 11 or 12 wherein the impregnating substance is a thermoplastic polymer selected from a group of Polyolefins such as PE, PP and PB, Polyamides such as PA and PPA, Polyimides such as PI and PEI, Polyamide-imide, Polysulphones such as PS and PES, Polyesters such as PET and PBT, Polycarbonates, Polyurethanes, Polyketones such as PK, PEK and PEEK, Polyacrylates, Polystyrene, Polyvinylchloride, ABS, PC/ABS and a mixture thereof, or a thermosetting resin precursor selected from a group of Epoxy, Ester, Urethanes, Phenolic, Alkyd and a mixture thereof.

14. A method according to any of claims 11 to 1 3 wherein the filaments supplied at step (a) are selected from a group of glass fibers, mineral fibers, carbon fibers, graphite fibers, natural fibers, ceramic fibers, polymeric and syntethic fibers.

15. A method according to any of claims 11 to 14 wherein the filaments supplied at step (a) are coated by a sizing and/or binding agent.

16. A method according to any of claims 11 to 15 further comprising steps of converging the filaments supplied at step (a) within a passageway (311) of an impregnation assembly (3) and forming a flat shape (9) of the filaments (7) prior to the initial meeting point of the filaments (7) and the impregnating substance (8).

17. A method according to any of claims 11 to 16, wherein the flow of the impregnating substance (8) is supplied via an outlet (324) for the impregnating substance having an oblong shape.

18. A method according to any of claims 11 to 17 wherein the flow of the impregnating substance (8) in step (b) is in a form of layer at the initial meeting point of the filaments and the impregnating substance (8).

19. A method according to any of claims 11 to 18 further comprising a step of pulling the sandwiched filaments with the impregnating substance (8) through an exit passage (322) having a flat cross-section.

20. A method according to any of claims 11 to 19 further comprising a step of subjecting a strand and/or filaments supplied at step (a) to air flow at an angle, preferably substantially perpendicular, with respect to the moving direction of the strand and/or filaments within a passageway (21) of a spreader assembly (2).

21. A method according to claim 20 wherein the strand and/or filaments are subjected to the air flow through at least one hole disposed at the one end (24) of a through hole (242) connecting to the passageway (21), wherein the passageway (21) comprises an inlet opening (211) for receiving said fiber strand and/or filaments, an outlet opening (232) through which said strand and/or filaments go out the passageway (21), and a divergent zone (23) having an entrance end (231) and an exit end (232) wherein the area or said exit end (232) is larger than the one of the said entrance end (231).

22. A method according to claim 21 wherein the strand and/or filaments are subjected to the air flow within an inner channel (22) having a rectilinear shape which is disposed between the inlet opening (211) of the passageway (21) and the entrance end (231) of the divergent zone, preferably disposed at a point immediately upstream from the entrance end (231) of the divergent zone (23).

23. A method according to any of claims 11 to 22 further comprising a step of heating the strand and/or filaments prior to step (b).

24. A method according to any of claims 11 to 23 further comprising steps of:
o flattening the impregnated fibers provided by step (b); and thereafter
o winding up the impregnated fibers onto a winding core.

25. A method according to any of claims 11 to 22 further comprising steps of:
o shaping the impregnated fibers provided by step (b) collectively into a rod; and thereafter
o cutting the rod to desired length
